Europäisches Patentamt

European Patent Office

Office européen des brevets

(19)

(11) Veröffentlichungsnummer: **0 014 860**
**B1**

(12) **EUROPÄISCHE PATENTSCHRIFT**

(45) Veröffentlichungstag der Patentschrift:
**25.01.84**

(21) Anmeldenummer: **80100395.5**

(22) Anmeldetag: **25.01.80**

(51) Int. Cl.³: **A 61 C 13/08**

(54) **Formkerne zur Herstellung von Zahnbrückengliedern.**

(30) Priorität: **02.02.79 US 8944**

(43) Veröffentlichungstag der Anmeldung:
**03.09.80 Patentblatt 80/18**

(45) Bekanntmachung des Hinweises auf die Patenterteilung:
**25.01.84 Patentblatt 84/4**

(84) Benannte Vertragsstaaten:
**AT BE CH DE FR GB IT NL SE**

(56) Entgegenhaltungen:
**BE - A - 664 451**
**CH - A - 273 248**
**CH - A - 307 788**
**DE - C - 1 441 336**
**US - A - 4 059 901**

**Die Akte enthält technische Angaben, die nach dem Eingang der Anmeldung eingereicht wurden und die nicht in dieser Patentschrift enthalten sind.**

(73) Patentinhaber: **Etablissement Dentaire IVOCLAR, FL-9494 Schaan (LI)**

(72) Erfinder: **Shoher, Itzhak, Dr., 50, Shlomo Hamelech St., Tel Aviv 64386 (IL)**
Erfinder: **Whiteman, Aaron, 50, Shlomo Hamelech St., Tel Aviv 64 386 (IL)**

(74) Vertreter: **Splanemann, Rainer, Dipl.-Ing. et al, Patentanwälte Dipl.-Ing. R. Splanemann, Dr. B. Reitzner Tal 13, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

Formkerne zur Herstellung von Zahnbrückengliedern

Die Erfindung bezieht sich auf Formkerne aus Kunststoff oder Wachs zur Herstellung von Brückengliedern aus Metall, die vollkommen von Zahnporzellan oder Verblendkunststoff umschlossen sind.

In der festsitzenden Prothetik verwendet man heute oft Metall-Zahnporzellankonstruktionen. Das Zahnporzellan hat ausgezeichnete optische Eigenschaften zur Nachahmung des natürlichen Zahnschmelzes, kann leicht modelliert werden und trägt somit den ästhetischen Anforderungen bei der Zahnrestauration Rechnung. Trotz aller Sorgfalt bei der Verarbeitung neigen die Metall-Zahnporzellankonstruktionen dazu, relativ leicht zu brechen. Man kann dabei das Versagen des metallgebundenen Zahnporzellans nicht nur auf zu grosse Kaubelastungen oder Konzessionen bei der Herstellung schieben, da die Herstellung dieser Art von Zahnersatz sich auf Prinzipien und Techniken stützt, die über viele Jahre entwickelt worden sind. Ausgedehnte Untersuchungen der Konstruktionsvariablen wurden begrenzt auf Material, Materialzusammensetzung und Materialeigenschaften, Vorbehandlung der Metalloberfläche zur Gewährleistung einer zufriedenstellenden Bindung zwischen Metall und Zahnporzellan sowie Konstruktion des Metallunterbaus. Dieser Metallunterbau muss so stark sein, dass er sich unter Krafteinwirkung nicht verformt und muss ausserdem mit geeigneten Methoden so hergestellt werden, dass ein sauberer Abschluss zwischen Metallgerüst und präpariertem Zahn erfolgt. Um die letztgenannte Forderung zu erfüllen, müssen Abdrucknahme, Herstellung des Modells, Modellieren der Wachsform, Einbetten und Giessen äusserst sorgfältig geschehen. Der Metallunterbau wird dabei mit Hilfe von vorgefertigten Teilen aus Wachs oder Kunststoff hergestellt, wenn man z.B. eine mehrgliedrige Brücke anfertigt.

Der äusseren Gestaltung des Metallunterbaus, d.h. der Oberflächengeometrie jener Metallfläche, die an das Zahnporzellan grenzt, wurde bisher wenig Aufmerksamkeit gewidmet. Gewöhnlich besitzt der Formkern aus Wachs oder Kunststoff, welcher eingebettet und aus dem dann der Metallunterbau hergestellt wird, eine fingerhut- oder leicht höckerförmige Gestalt. Die prinzipielle Gestaltung des Zahnrestaurationsteils, insbesondere des Brückenglieds basiert darauf, dass man soviel wie möglich Metall verwendet, um die notwendige Stabilität zu erzielen. Der Metallunterbau folgt dabei in seiner äusseren Form meistens der Form des herzustellenden Zahnes, wobei das Zahnporzellan in möglichst gleichmässiger Dicke aufgetragen wird. Die Kaufläche wird aber nach dem Stand der Technik mehr oder weniger flach ausgebildet. Die heutige Praxis verlangt ausserdem, dass man – wo immer möglich – die Ecken abrundet und es wird, um die Stabilität zu verstärken, noch ein cervikaler Rand empfohlen.

Es sind Formkerne aus Wachs bekannt, die zur zeitsparenden Herstellung von Kronen, Brücken, Teleskopkronen usw. verwendet werden. Diese Fertigteile werden dabei der Lückengrösse und dem präparierten Zahnstumpf angepasst. Sonst gilt aber für sie aus Stabilitätsgründen das vorhergesagte, d.h. es wird beim Giessen verhältnismässig viel Metall – meist Edelmetall – benötigt, wobei die Verbindung zwischen Metall und Zahnporzellan nicht immer zufriedenstellend ist.

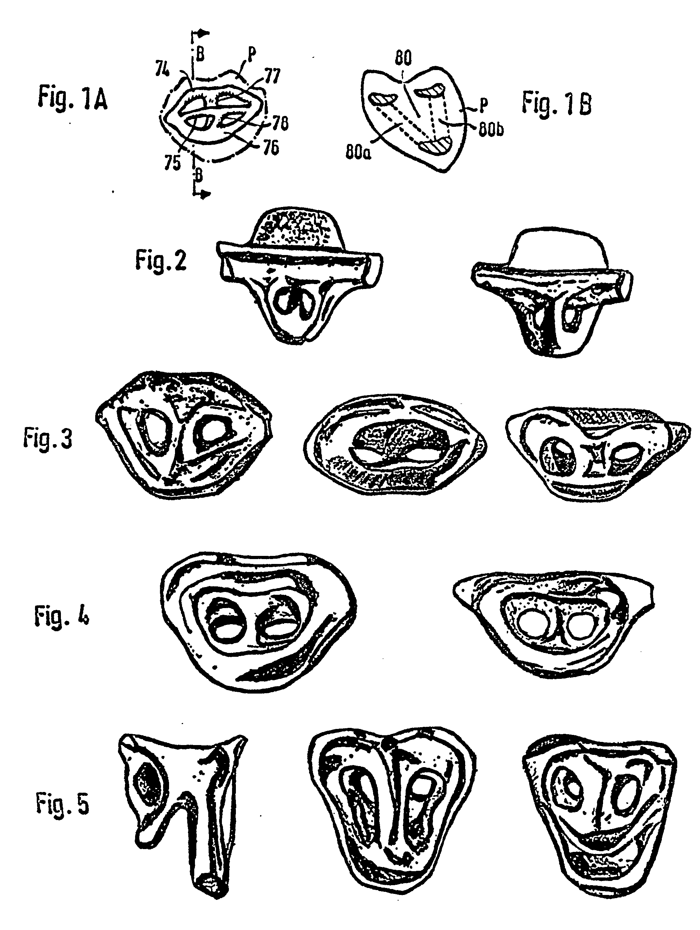

Ferner ist aus der CH-A-273 248 eine Vollguss-Zahnprothese, beispielsweise eine Krone oder ein Brückenglied, mit einem Traggerüst aus Metall und in Fenstern desselben eingesetzten Kunststoff-Facetten bekannt, wobei das Traggerüst jedoch mindestens zum Teil sichtbar ist. Das Traggerüst ist dabei gingivalseitig zu einer tellerartigen Mulde verbreitet. Insoweit Kronen angesprochen sind (Fig. 1 bis Fig. 5), sind diese okklusal und labial bzw. buccal mit Fenstern versehen. Fig. 3 weist ebenfalls ein Fenster an der Okklusalseite und ein weiteres Fenster an der der Gingivalseite zugewandten Seite auf.

Aber auch die Ausführungsformen nach Fig. 8 und Fig. 9 der genannten Druckschrift, die Brückenglieder betreffen, zeigen keine vollständige Ummantelung des Metalls. Der Querschnitt weist nach der Gingivalseite hin eine deutlich tellerförmig gestaltete Tragmulde auf. Diese Brückenglieder können okklusalseitig bzw. labial- oder buccalseitig je ein Fenster aufweisen, in die Kunststoff-Facetten eingegossen sind.

Dieser ältere Stand der Technik hat dem eingangs erwähnten jüngeren Stand der Technik keine Anregung geboten, da hier nur an eine Verbesserung des kosmetischen Effektes, d.h. an eine ästhetischere Ausbildung einer Brücke gedacht ist. Die bessere Ästhetik wird erzielt durch Fenster aus Verblendkunststoff, d.h. das Metallgerüst ist noch sichtbar. Der jüngere Stand der Technik kennt aber bereits die Vollummantelung von Kronen- und Brückengliedern, jedoch werden diese möglichst mit gleichmässiger Dicke vom Porzellan oder Kunststoff ummantelt, um die notwendige Stabilität zu gewährleisten. Es ist bekannt, dass ungleichmässige Dicken leicht zu Verspannungen und zum Abplatzen z.B. des aufgebrannten Porzellans führen.

Die Erfindung hat sich die Aufgabe gestellt, Formkerne aus Kunststoff oder Wachs zur Herstellung von Brückengliedern aus Metall zur Verfügung zu stellen, die vollkommen von Zahnporzellan oder Verblendkunststoff umschlossen sind, derart, dass bei verbesserter Stabilität der Gesamtkonstruktion leichtere Brückenglieder Verwendung finden, die zum Zahnporzellan bzw. Zahnkunststoff einen erheblich verbesserten Verbund aufweisen und die unter der üblichen Kaubelastung nahezu bruchfest sind.

Gegenstand der Erfindung ist somit ein Formkern der eingangs definierten Gattung, der dadurch gekennzeichnet ist, dass er als Gerüstkörper ausgebildet ist, der a) einen Y- oder V-förmigen Schnitt von der Okklusalseite bzw. Inzisalseite zur Gingivalseite aufweist und b) an mindestens einer der der Gingivalseite zugewandten Seiten zwei oder mehrere konkave Vertiefungen aufweist, von denen mindestens eine mit einer Durchbrechung versehen ist.

Die erfindungsgemässen Formkerne werden zum Giessen von Brückengliedern aus Metall verwendet, wobei der Kunststoff bzw. das Wachs vor dem Giessen ausgeschmolzen und/oder ausgebrannt wird. Die erhaltenen Brückenglieder bestehen aus einem mit Zahnporzellan oder Verblendkunststoff verbindbaren Metall. Diese Metallteile bilden den Metallunterbau, auf den das zur Nachahmung des natürlichen Zahnschmelzes verwendete Dentalporzellan aufgebrannt bzw. ein Verblendkunststoff aufgetragen und polymerisiert wird.

Die Zahnprothese nach der CH-A-273 248 unterscheidet sich, insoweit Kronen angesprochen sind, vom Erfindungsgegenstand dadurch, dass die Erfindung nicht auf Kronen angewendet werden kann, bei denen die kennzeichnenden Merkmale (a) und (b) nicht angesprochen werden und an eine vollständige Ummantelung nicht gedacht wurde. Die Ausführungsformen nach Fig. 8 und 9 der CH-A-273 248, die Brückenglieder betreffen, berühren den Erfindungsgegenstand ebenfalls nicht, da an eine vollständige Ummantelung nicht gedacht ist, der V- bzw. Y-förmige Schnitt von der Okklusalseite bzw. Incisalseite zur Gingivalseite fehlt und das kennzeichnende Merkmal b) weder offenbart noch nahegelegt ist. Ausserdem spricht die CH-A-273 248 gegenüber dem Erfindungsgegenstand eine völlig andere Aufgabe an und gibt dem Fachmann keinerlei Hinweise bezüglich Verbesserung der Stabilität und der Bruchfestigkeit.

Die bekannten Formkerne aus Kunststoff oder Wachs zur Herstellung von Brückengliedern sind meistens sehr massiv der Form des zu modellierenden Zahnes nachgeahmt. Wird mit diesen Teilen eine Brücke angefertigt, so stellt der Zahntechniker die Teile in einem Artikulator so auf, dass sie sich in das Restgebiss harmonisch und zahnmedizinisch einwandfrei als Brücke einfügen. Danach werden die Formkerne für die Brückenglieder zusammen wieder dem Artikulator entnommen, eingebettet und mit Metall, vorzugsweise Edelmetall, ausgegossen. Die als Brückenglieder erhaltenen Gussteile entsprechen jetzt den Formkernen aus Wachs, die dem Artikulator entnommen werden. Sie werden dann mit Zahnporzellanmasse verblendet, die gebrannt wird. Das Zahnporzellan besteht dabei meist aus einer Mischung aus Feldspat, Kaolin und Quarz und besitzt im gebrannten Zustand hervorragende physikalische und ästhetische Eigenschaften. Der Metallunterbau besteht aus halbedlen oder edlen Legierungen, obgleich auch unedle Metalle Verwendung finden.

Da die erfindungsgemässen Formkerne Gerüstkörper mit einem Y- oder V-förmigen Schnitt von der Okklusalseite bzw. Inzisalseite zur Gingivalseite darstellen, d.h. an der der Okklusalfläche bzw. der Schneidekante (bei Frontzähnen) zugewandten Seite eine grössere Abmessung haben, wird bei den daraus hergestellten Brückengliedern nach dem Aufbrennen des Dentalporzellans bzw. des Verblendkunststoffes der Vorteil erzielt, dass die beim Kauen auf die Okklusalflächen bzw. Schneidekanten wirkenden Kräfte sich nicht durch den gesamten Zahnersatz fortpflanzen und an der Grenzfläche zwischen Brückenglied und Zahnporzellan bzw. Dentalkunststoff zu Absplitterungen führen, sondern durch die den Okklusalflächen bzw. Schneidekanten zugewandten grösseren Seiten des Brückenglieds aufgefangen werden. Bei den bekannten Zahnrestaurationsteilen, die sich zur Gingivalseite hin verbreitern (beispielsweise ein Metallunterbau für eine Jakketkrone, der sich in Form eines Kegelstumpfes zur Gingivalseite hin öffnet) erfolgt dagegen bei einem Druck auf die Kaufläche leicht eine Absplitterung des Zahnersatzes.

Wichtig ist ferner, dass der Gerüstkörper auf mindestens einer der der Gingivalseite zugewandten Seiten zwei oder mehrere konkave Vertiefungen aufweist, von denen mindestens eine mit einer Durchbrechung versehen ist. Unter diesen Seiten sind die Mesial-, Distal-, Lingual- und Buccalseiten sowie die dazwischenliegenden Seiten zu verstehen, im Gegensatz zur Okklusalfläche bzw. zur Schneidekante, die der Gingivalseite abgewandt sind.

Vorzugsweise ist (sind) die Lingual- und/oder Buccalseite mit Durchbrechungen versehen. Die Durchbrechungen werden vorzugsweise durch miteinander verbundene Stege gebildet. Vorzugsweise ist ein Teil der Stege unter Ausbildung einer elliptischen Form miteinander verbunden. Vorzugsweise ist zusätzlich mindestens eine konkave Vertiefung der Okklusalfläche zugewandt.

Der Einfluss der konkaven Vertiefungen beruht wahrscheinlich darauf, dass bei der Kontraktion des Brückenglieds ein Kompressionszustand in dem damit verbundenen Zahnporzellan bzw. Dentalkunststoff erzeugt wird. Dieser Kompressionszustand ist wahrscheinlich für die Erhöhung der Bruchfestigkeit des Zahnporzellans bzw. Dentalkunststoffs verantwortlich. Dies ist insbesondere bei Zahnporzellan der Fall, wenn das Zahnporzellan auf das Brückenglied aus Metall aufgebrannt wird. Da der thermische Ausdehnungskoeffizient des Metalls gewöhnlich höher ist als der des Zahnporzellans, kontrahiert das Metall stärker, wodurch im Zahnporzellan ein Kompressionszustand erzeugt wird. Die konkaven Ausformungen hindern das Metall, sich an der Grenzfläche abzulösen und setzen somit die ganze Anordnung unter Kompression.

Der Y- bzw. V-förmige Schnitt durch den Formkern ergibt gewissermassen die Form eines sich zur Okklusalfläche bzw. Schneidekante hin öffnenden Trichters mit einem bzw. ohne einen zur Gingivalseite gerichteten Ansatz.

Durch die gerüstförmige Ausbildung der Formkerne, die im Extremfall aus einer Vielzahl von miteinander verbundenen Stegen bestehen, kann wertvolles Dentalmetall eingespart werden. Vor allem aber wird der Verbund zwischen den daraus hergestellten Brückengliedern und dem Material des nachgeahmten Zahnschmelzes (z.B. dem Zahnporzellan) verbessert, da letzteres das Brückenglied vollständig umgibt.

Bei Verwendung der erfindungsgemässen Formkerne zur Herstellung von künstlichen Schneide- und Eckzähnen, hat es sich als vorteilhaft erwiesen, dass die der Inzisalkante zugewandte Seite einen schneidenartigen Vorsprung trägt. Auf diese Weise wird das Material in der Nähe der Schneidekante verstärkt.

Dentalmetalle mit einem hohen Elastizitätsmodul bzw. einem grossen Ausdehnungskoeffizienten werden bevorzugt verwendet, da diese Metalle im Zahnporzellan einen hohen Kompressionszustand erzeugen, wodurch die Bruchfestigkeit erhöht wird. Vorzugsweise sollte der Elastizitätsmodul über 11 200 kg/mm² liegen. Vorzugsweise ist der Ausdehnungskoeffizient des Dentalmetalls höher als der des Dentalporzellans.

Die Erfindung ist nachstehend anhand der Zeichnung erläutert. Es zeigen:

Fig. 1A und 1B ein molares Brückenglied in Form eines Gerüsts mit Durchbrechungen, mit angedeuteter Porzellanverblendung;

Fig. 1 bis 5 Formkerne für Brückenglieder aus verschiedenen Perspektiven. Bei diesen Figuren wurde die angedeutete Zahnporzellanverblendung weggelassen.

Fig. 1A zeigt die gerüstartige Ausgestaltung eines erfindungsgemässen Formkerns, die mit wenig Metall auskommt. Sie umfasst mehrere verhältnismässig dünne Stege 74, 75, 76, 77, 78, die miteinander verbunden sind und ein offenes Gerippe formen. Der Querschnitt ist, wie in Fig. 1B angedeutet, annähernd V-förmig und weist eine konkave Vertiefung mit einer Durchbrechung 80 an der der Okklusalfläche zugewandten Seite auf, die im wesentlichen nur aus den Flächen der in Gingivalrichtung verlaufenden Stege besteht. Die Stege 74 und 75 erstrecken sich mesiodistal an den buccalen und lingualen Seiten des Formkerns. Der Steg 76 erstreckt sich gleichfalls mesiodistal von einem Punkt an den buccalen und lingualen Flächen und verbindet sich mit den Stegen 74 und 75 im interdentalen Bereich. Die Stege 77 und 78 erstrecken sich in okkluso-cervicaler Richtung entlang den buccalen und lingualen Seiten unmittelbar an den mesialen und distalen Flächen. Die Stege 74 und 75 beschreiben eine geschlossene Ellipse.

Auch die der Gingivalseite zugewandten Vertiefungen mit den Durchbrechungen 80a und 80b können als konkave Vertiefungen angesehen werden. Die Porzellanmasse P umgibt sämtliche Stege, wodurch sie bei der Kontraktion des Metalls unter Kompressionsdruck gesetzt wird.

Die Fig. 2 bis 5 zeigen weitere Ausführungsformen von Formkernen zur Herstellung von Brückengliedern mit konkaven Vertiefungen und vorzugsweise zwei Durchbrechungen.

## Patentansprüche

1. Formkern aus Kunststoff oder Wachs zur Herstellung von Brückengliedern aus Metall, die vollkommen von Zahnporzellan (P) oder Verblendkunststoff umschlossen sind, dadurch gekennzeichnet, dass er als Gerüstkörper ausgebildet ist, der

a) einen Y- oder V-förmigen Schnitt von der Okklusalseite bzw. Inzisalseite zur Gingivalseite aufweist und

b) an mindestens einer der der Gingivalseite zugewandten Seiten zwei oder mehrere konkave Vertiefungen aufweist, von denen mindestens eine mit einer Durchbrechung (80a oder 80b) versehen ist.

2. Formkern nach Anspruch 1, dadurch gekennzeichnet, dass die der Inzisalkante zugewandte Seite einen schneidenartigen Vorsprung trägt.

3. Formkern nach Anspruch 1 oder 2, dadurch gekennzeichnet, dass die Lingual- und/oder Buccalseite mit Durchbrechungen (80a, 80b) versehen sind/ist.

4. Formkern nach Anspruch 3, dadurch gekennzeichnet, dass die Durchbrechungen (80a, 80b) durch miteinander verbundene Stege (74 bis 78) gebildet sind.

5. Formkern nach Anspruch 4, dadurch gekennzeichnet, dass ein Teil der Stege unter Ausbildung einer elliptischen Form miteinander verbunden ist.

6. Formkern nach einem der Ansprüche 1, 3, 4 und 5, dadurch gekennzeichnet, dass mindestens eine konkave Vertiefung (80) der Okklusalseite zugewandt ist.

## Claims

1. Moulding core of plastics material or wax for producing bridge members of metal which are completely surrounded by dental porcelain (P) or plastics facing, characterised in that it is constructed as a framework structure which

a) has a Y or V-shaped section from the occlusal side or incisal side to the gingival side and

b) on at least one of the sides directed towards the gingival side has two or more concave recesses of which at least one is provided with an opening (80a or 80b).

2. Moulding core as claimed in claim 1, characterised in that the side directed towards the incisal edge has a knife-like protrusion.

3. Moulding core as claimed in claim 1 or claim 2, characterised in that the lingual and/or buccal side is/are provided with openings (80a, 80b).

4. Moulding core as claimed in claim 3, characterised in that the openings (80a, 80b) are formed by webs (74–78) connected to one another.

5. Moulding core as claimed in claim 4, characterised in that a part of the webs is connected together to form an elliptical shape.

6. Moulding core as claimed in one of claims 1, 3, 4, and 5, characterised in that at least one concave recess (80) is directed towards the occlusal side.

## Revendications

1. Noyau de moulage en matière plastique ou en cire, pour fabriquer des éléments de bridge en métal qui sont enrobés complètement de porcelaine dentaire (P) ou de matière plastique de revêtement caractérisé en ce que

a) il présente une section en Y en ou V de la face occlusive ou incisive à la face gingivale, et

b) il comporte sur l'une au moins des faces situées du côté de la face gingivale deux concavités ou plus dont l'une au moins comporte un ajour (80a ou 80b).

2. Noyau selon la revendication 1, caractérisé en ce que la face située vers l'arête incisive comporte une saillie de type tranchant.

3. Noyau selon la revendication 1 ou 2, caractérisé en ce que la face linguale et/ou buccale comporte des ajours (80a, 80b).

4. Noyau selon la revendication 3, caractérisé en ce que les ajours (80a, 80b) sont formés par des barrettes (74 à 78) reliées entre elles.

5. Noyau selon la revendication 4, caractérisé en ce qu'une partie des barrettes sont reliées entre elles en produisant une forme elliptique.

6. Noyau selon l'une quelconque des revendications 1, 3, 4 et 5, caractérisé en ce qu'au moins une concavité (80) est située du côté de la face occlusive.

Fig. 1A

Fig. 1B

Fig. 2

Fig. 3

Fig. 4

Fig. 5